# EUROPEAN PATENT APPLICATION

(11) **EP 2 914 013 A1**
(43) Date of publication of application: **02.09.2015**
(21) Application number: 13858144.2
(22) Date of filing: 22.10.2013
(51) Int. Cl.: H04N 21/45

(54) **METHOD AND TERMINAL FOR SHARING PROGRAM IN INTERACTIVE NETWORK TELEVISION SYSTEM**

(30) Priority: 27.11.2012 CN 201210490421
(71) Applicant: ZTE Corporation, Shenzhen, Guangdong 518057 (CN)
(72) Inventor: CUI, Zhiwei, Shenzhen Guangdong 518057 (CN); JIANG, Changhua, Shenzhen Guangdong 518057 (CN)
(74) Representative: Benson, Christopher
(86) International application number: PCT/CN2013/085709
(87) International publication number: WO 2014/082508

(57) **Abstract**

A method and terminal for sharing programs in an internet protocol television system are provided. The method includes: a first terminal extracting content key information corresponding to program content in an IPTV system; and the first terminal generating recommended content information based on the content key information, and sending the recommended content information to a second terminal through a way of a short message or a multimedia message. With the embodiment of the present invention, sharing of programs among different terminals in the IPTV system can be achieved.

## Description

### Technical Field

The present application relates to the digital home network technology field, and in particular, to a method and terminal for sharing programs in an internet protocol television system.

### Background of the Related Art

The internet protocol television (IPTV) client running in the intelligent mobile phone now has already been commercialized and popularized to a great extent. The functions of the IPTV mobile phone client are completed day by day; besides it can complete the basic function, such as, the inquiry and display of the playbill, etc., it can further support the function, such as, playing the audio and video programs, etc.

The common way of sharing the programs among the IPTV clients includes: realizing the sharing (three-screen sharing) through the programs (collection and bookmark) of the same user (or user group) of the set-top box and the mobile phone client; and performing sharing through the community function built in the IPTV system in different clients, etc.

However, the above-mentioned ways of program sharing all have their own limitations. For example, the three-screen sharing of the set-top box and the mobile phone client is the program sharing of various clients performed in the same user account (or the same group) at the system side; and the sharing performed through the IPTV community function, for example, sharing with the community friends, further has the problems that the range of friends is small (same as the IPTV community user) and the ways of communication is limited inside the IPTV community.

### Summary of the Invention

The technical problem that the present application requires to solve is to provide a method and terminal for sharing programs in an internet protocol television system, to realize the sharing of the programs among various terminals in the IPTV system.

In order to solve the above-mentioned technical problem, the present application provides a method for sharing programs in an internet protocol television system, comprising:
a first terminal extracting content key information corresponding to program content in an internet protocol television (IPTV) system; and
the first terminal generating recommended content information based on the content key information, and sending the recommended content information to a second terminal through a way of a short message or a multimedia message.

The content key information of the program content extracted by the first terminal comprises: a column ID and a program ID of the program content in the IPTV system.

The first terminal extracts the content key information of the program content in the IPTV system when browsing or watching the program content; and
the first terminal generates the recommended content information based on content key information of one or more extracted program contents.

The content key information of the program in the IPTV system extracted by the first terminal further comprises one or any combination of the following information: webpage address information of a default IPTV portal;
comment information of the program; and
screenshot information of the program.

The first terminal sends the generated recommended content information by adopting a form of encrypted ciphertext.

The present application further provides a method for sharing programs in an internet protocol television system, comprising:
a second terminal receiving a short message or a multimedia message sent by a first terminal, and obtaining content key information of program content in an IPTV system according to recommended content information in the short message or the multimedia message; and
after the second terminal logs on the IPTV system, redirecting to the program content in the IPTV system according to the obtained content key information.

The second terminal redirects to the program content in the IPTV system according to a column ID and program ID of the program content in the IPTV system included in the obtained content key information.

The second terminal locates a corresponding playing position of the program content for playing according to one or more playing progress positions included in the obtained content key information.

When the recommended content information in the short message or multimedia message received by the second terminal is in a form of encrypted ciphertext, the second terminal obtains the content key information after decrypting the recommended content information.

The present application further provides a terminal for sharing programs in an internet protocol television system, comprising:
a key information extracting module, configured to: extract content key information corresponding to program content in an IPTV system;
a recommended content information generating module, configured to: generate the recommended content information based on the content key information; and
a recommended content information sending module, configured to: send the recommended content information to other intelligent terminal users through a way of a short message or a multimedia message.

The key information extracting module is configured to: extract following content key information of the program content: a column ID and program ID of the program content in the IPTV system.

The key information extracting module is configured to: extract content key information of one or more program contents in the IPTV system when the terminal browses or watches the program content in the IPTV system; and
the recommended content information generating module is configured to: generate the recommended content information based on content key information of one or more program contents extracted by the key information extracting module.

The key information extracting module is further configured to: extract one or any combination of following content key information of the program in the IPTV system:
webpage address information of a default IPTV portal;
comment information of the program; and
screenshot information of the program.

The first terminal sends the generated recommended content information by adopting a form of encrypted ciphertext.

The present application further provides a terminal for sharing programs in an internet protocol television system, comprising:
an information receiving and analyzing module, configured to: receive a short message or a multimedia message sent by other terminals, and obtain content key information of program content in an IPTV system according to recommended content information in the short message or the multimedia message; and
a program redirecting module, configured to: after the terminal logs on the IPTV system, redirect to the program content in the IPTV system according to the content key information obtained by the information receiving and analyzing module.

The program redirecting module is configured to: redirect to the program content in the IPTV system according to a column ID and program ID of the program content in the IPTV system included in the content key information.

The program redirecting module is configured to: locate a corresponding playing position of the program content for playing according to one or more playing progress positions included in the obtained content key information.

The information receiving and analyzing module is configured to: if the recommended content information in the received short message or multimedia message is in a form of encrypted ciphertext, then obtain the content key information after decrypting the recommended content information.

The present application provides a mechanism for realizing the IPTV program sharing through the interactive ways not in the IPTV system, such as, the short message of the mobile phone, etc., aiming at the problems existing in the current IPTV program sharing method.

### Brief Description of Drawings

The accompanying drawings described herein are used to provide a further understanding for the present application and constitute a part of the present application. The illustrated embodiments of the present application and the description thereof are used to explain the present application, rather than constituting an inappropriate limitation to the present application. In the drawings:
FIG. 1 is a flow chart of a method for sharing programs in an internet protocol television system in an embodiment of the present application;
FIG. 2 is a flow chart of a method for sharing programs in an internet protocol television system in another embodiment of the present application;
FIG. 3 is a composition block diagram of a terminal for sharing programs in an internet protocol television system in another embodiment of the present application;
FIG. 4 is a composition block diagram of a terminal for sharing programs in an internet protocol television system in another embodiment of the present application.

### Preferred Embodiments of the Present Invention

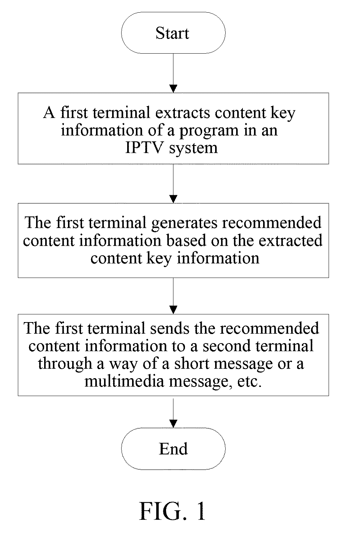

The present embodiment provides a method for sharing programs in an internet protocol television system, as shown in FIG. 1. The method includes the following main steps.

In step 1, a first terminal extracts content key information of a program in an IPTV system.

In step 2, the first terminal generates recommended content information based on the extracted content key information.

In step 3, the first terminal sends the recommended content information to a second terminal through a way of a short message or a multimedia message and so on.

The content identification information of the program extracted by the first terminal includes but not limited to: a column ID and a content ID of the program in the IPTV system, etc.

The first terminal can also include a webpage address link of a default IPTV portal in the recommended content information.

When the second terminal receives the recommended content information in the short message, its browser can open the default IPTV portal webpage pointed by the link through clicking the link.

The first terminal can also take the progress position of the current playing program as the bookmark, which is included in the recommended content information.

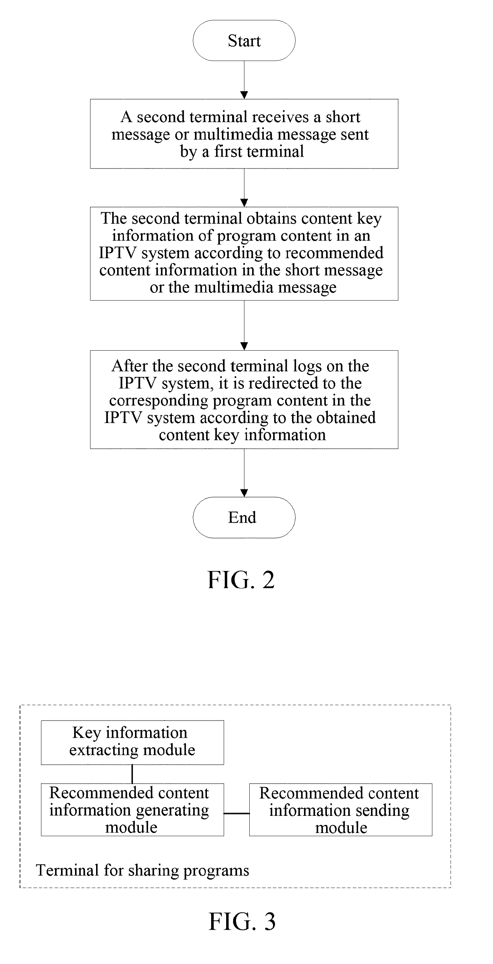

The present embodiment provides a method for sharing programs in an internet protocol television system, as shown in FIG. 2. The method includes the following main steps.

In step 1, a second terminal receives a short message or a multimedia message sent by a first terminal.

In step 2, the second terminal obtains content key information of program content in an IPTV system according to recommended content information in the short message or the multimedia message.

In step 3, after the second terminal logs on the IPTV system, it is redirected to the corresponding program content in the IPTV system according to the obtained content key information.

When the second terminal obtains the content key information, if it has not logged on the IPTV system, then it logs on the IPTV system first; if it has not registered in the IPTV system yet, then it registers first and logs on the IPTV system.

The embodiment of the present application is described in detail with reference to the accompanying drawings hereinafter. It should be illustrated that, in the case of not conflicting, the embodiments in the present application and features in these embodiments can be combined with each other.

### Embodiment one

In the present embodiment, the mobile phone user A uses the IPTV mobile phone client to watch the IPTV program. When finding the program required to be shared, the user A captures the information, such as, the content identification, etc., of the currently played program in the IPTV system through using the short message sharing function of the mobile phone client, taking it as the content of the recommended information, and sends to another mobile phone user B through the short message.

Further, after the mobile phone user B receives the program recommendation short message, through clicking the program link in the short message, if the mobile phone of the mobile phone user B has already installed the IPTV mobile phone client at this moment, then the IPTV mobile phone client is automatically started and redirected to the program in the IPTV system according to the content of the recommended information, playing the IPTV program recommended by the user A. If the receiver of the short message, the user B, has not installed the IPTV client, when clicking the program link in the short message, it visits the corresponding website which recommends it to download and install the IPTV mobile phone client, and applies for the account number through the guide, logs on the IPTV system and watches the recommended program.

In addition, when the IPTV mobile phone client captures the content identification of the recommended program, it not only can include the unique identification of the corresponding content of its recommended program as the parameter to be sent, but also can take the playing progress position of the current program as the bookmark to be also added as a part of the parameter. For example, the user A might expect the user B to start watching from the current position, for example, the user A shares the 400-meter freestyle match of Sun Yang with the user B through the short message, and it can take the time point that Sun Yang enters the last 50 meters as the bookmark for recommendation. After the user B receives the short message, it starts to play from the position of bookmark directly when clicking to play the program and can watch the key paragraph that Sun Yang snatches a gold medal directly.

In addition, the user A can also add a short comment into the short message, in order to play the function of the brief introduction of the program.

Further, when the user A takes the current playing progress as the starting point of the bookmark, it can set the ending time point of the bookmark through dragging the progress bar, etc., at the same time, that is, recommending any paragraph of the current program to the user B, and even it can recommend several paragraphs of the current program to the user B, to form the editing effect.

Furthermore, when recommending the program, the IPTV mobile phone client can use the multimedia message, which includes the program link and the bookmark (of the playing progress), and it also takes the screenshot of the current video playing picture as the multimedia message picture for sending together. The user B can watch the excellent screenshot firstly when receiving the multimedia message, which achieves the effect similar to the poster recommendation (and the poster is selected by the user A itself), so that the user experience is improved more greatly.

It can be known according to the above-mentioned implementation scheme that in the present application, the IPTV program is shared through an interactive way not in the IPTV system, such as, the short message, etc., so that the social network of the user in the IPTV system is no longer limited to its own users (or the user group) or the friends of which the quantity is relatively limited in the IPTV community, which makes the range of sharing programs expand to the contacts of the mobile phone.

More even, the operator can perform the popularization of program through sending the program recommendation short messages in bulk to a large number of non-contact users. For example, the short messages are sent in bulk to recommend the rollback video of men's synchronized diving from 10-meter platform. That will play a very good promoting role in popularization of the IPTV services and the development of the new users.

It can be found out through the present embodiment that the difference of the present application relative to the video multimedia message sharing method lies in that the user does not need to upload the content to the video content server when sharing the video, (for the multimedia message service, it needs to upload the video to the multimedia message center), and the shared video has already existed in the IPTV system and does not need to take up resources at the server side repeatedly; moreover, the present application is different with the method that the video link is shared directly for the general network video, and the shared and recommended information is the unique identification of the content corresponding to the program in the IPTV system, and the recommender A and the receiver B use their own account numbers to watch the same program respectively, therefore, it is more applicable to the chargeable IPTV system.

In addition, as shown in FIG. 3, the embodiment of the present application further provides a terminal for sharing programs in an IPTV system, comprising:
a key information extracting module, configured to: extract content key information corresponding to program content in an IPTV system;
a recommended content information generating module, configured to: generate the recommended content information based on the content key information; and
a recommended content information sending module, configured to: send the recommended content information to other intelligent terminal users through a way of a short message or a multimedia message.

The key information extracting module is configured to: extract the following content key information of the program content: a column ID and program ID of the program content in the IPTV system.

The key information extracting module is configured to: extract content key information of one or more program contents in the IPTV system when the terminal browses or watches the program content in the IPTV system; and
the recommended content information generating module is configured to: generate the recommended content information based on content key information of one or more program contents extracted by the key information extracting module.

The key information extracting module is further configured to: extract one or any combination of following content key information of the program in the IPTV system:
webpage address information of a default IPTV portal;
comment information of the program; and
screenshot information of the program.

The first terminal sends the generated recommended content information by adopting a form of encrypted ciphertext.

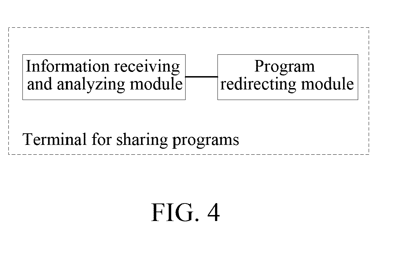

In addition, as shown in FIG. 4, the embodiment of the present application provides a terminal for sharing programs in an internet protocol television system, comprising:
an information receiving and analyzing module, configured to: receive a short message or a multimedia message sent by other terminals, and obtain content key information of program content in an IPTV system according to recommended content information in the short message or the multimedia message; and
a program redirecting module, configured to: after the terminal logs on the IPTV system, redirect to the program content in the IPTV system according to the content key information obtained by the information receiving and analyzing module.

The program redirecting module is configured to: redirect to the program content in the IPTV system according to a column ID and program ID of the program content in the IPTV system included in the content key information.

The program redirecting module is configured to: locate a corresponding playing position of the program content for playing according to one or more playing progress positions included in the obtained content key information.

The information receiving and analyzing module is configured to: if the recommended content information in the received short message or multimedia message is in a form of encrypted ciphertext, then obtain the content key information after decrypting the recommended content information.

The implementation of the technical scheme of the present application will be further described in detail with a specific application example hereinafter.

In the present application example, it is assumed that the user A shares one IPTV VOD program with the user B through the short message (with the bookmark) recommendation way and the short message receiver, the mobile phone user B, has already installed the IPTV mobile phone client as well. Its specific implementation steps are described as follows.

In step 101: the user A and the user B both have already installed the IPTV client (the IPTV client will register one fixed identification used for being started in the mobile phone operating system (such as, register symbol: zteiptv)), which can be realized in both the iOS and Android system.

In step 102: the user A logs on the IPTV system by using the client, and after the authentication of user, one VOD program is watched, "Olympic swimming final match" (for example, the program ID is 0000000030010000013128), and the column where the program is located is "Sports -> Olympic special topics" (for example, the column ID is 0201). The user B does not use the IPTV client at this moment. When the user A is watching for 3 minutes and 55 seconds, it clicks the "share" button on the IPTV client, and then the picture stops. Now the processing module in the IPTV mobile phone client of the user A performs the character encoding on three parameters, the column ID and program ID corresponding to the currently played program in the IPTV system and the current playing progress (bookmark), as one parameter character string which is taken as "message content 2"; and the webpage address link of the default IPTV shared portal can be taken as "message content 1"; the client displays the guide page in which the sharing of program is sent through the short message, and after the user A selects the user B in the address book of the mobile phone, the IPTV client automatically combines the "message content 1" and the "message content 2" as the content of the recommended short message, which is sent to the mobile phone of the user B by the mobile phone of the user A. For example, the pattern of the message content is: http://IPTV the webpage address of the shared portal? the column ID & the program ID & the current playing progress.

In step 103: After receiving the recommendation short message from the user A, the user B checks the content of the short message. When the user B clicks the link in the short message, the browser built in the mobile phone will open the default IPTV shared portal webpage pointed by the link.

In step 104: the JSP script in the portal page capture the column ID, the program ID and the bookmark time as the parameters at first, and then the local zteiptv application program of the user B is automatically started, and the parameters are transmitted to the application program.

In step 105: after the application program is started in the mobile phone of the user B, the parameters, the column ID, the program ID and the current playing progress, are obtained and then the account number B stored by the user B locally is utilized to log on the IPTV system (if the account number is not stored locally, then it prompts the user to log on the account number), and the detailed pages of the corresponding program are displayed according to the column ID and the program ID.

In step 106: if the user B has already ordered the current program, then the application program B performs authentication directly according to the program ID and the column ID, and obtains the authentication code (if it does not make an order, then the user B is prompted whether to order the program).

In step 107: the application program performs redirecting to the server according to the authentication code and the column IP and the program ID, and obtains the URL of the corresponding program.

In step 108: the application program on the mobile phone of the user B plays the program "Olympic swimming final match" according to the URL, and starts to play at the position of the bookmark, the third minute and 55 seconds, according to the current playing progress parameter.

At this moment, the user B will see the women 400-meter medley swimming final match, starting to play from the position of the third minute and 55 seconds, in the mobile phone.

In order to further improve the practicability and the precision of the present application, the following improvements can further be done for the above-mentioned embodiment.

In step 102, when the column ID and the content ID corresponding to the program and the current playing progress are taken as the parameter character string, the parameter character string can be encrypted in consideration of security.

In step 105, after the mobile phone client of the user B receives the encrypted parameter character string, it performs the decrypting on the encrypted string first and then reads the related playing parameters.

The above description is only the preferred embodiments of the present application and is not intended to limit the present application. The present application can have a variety of other embodiments. Those skilled in the art can make the corresponding modifications and variations according to the present application without departing from the spirit and essence of the present application. And all of these modifications or the variations should be included in the protection scope of the appended claims of the present application.

Obviously, it can be understood by those skilled in the art that each module or each step in the above-mentioned present application can be implemented by the universal calculating apparatus, and they can be integrated in a single calculating apparatus, or distributed in the network made up of a plurality of calculating apparatus. Alternatively, they can be implemented by the executable program codes of the calculating apparatus. Accordingly, they can be stored in the storage apparatus and implemented by the calculating apparatus, and in some situations, the shown or described steps can be executed according to a sequence different from that in this place, or they are made into various integrated circuit module respectively, or a plurality of modules or steps therein are made into the single integrated circuit module to be implemented. In this way, the present application is not limit to any specific form of the combination of the hardware and software.

### Industrial Applicability

The present application provides a mechanism for realizing the IPTV program sharing through the interactive ways not in the IPTV system, such as, the short message of the mobile phone, etc., aiming at the problems existing in the current IPTV program sharing method.

## Claims

1. A method for sharing programs in an internet protocol television system, comprising:
a first terminal extracting content key information corresponding to program content in an internet protocol television (IPTV) system; and
the first terminal generating recommended content information based on the content key information, and sending the recommended content information to a second terminal through a way of a short message or a multimedia message.

2. The method according to claim 1, wherein:
the content key information of the program content extracted by the first terminal comprises: a column ID and program ID of the program content in the IPTV system.

3. The method according to claim 1, wherein:
the first terminal extracts the content key information of the program content in the IPTV system when browsing or watching the program content; and
the first terminal generates the recommended content information based on content key information of one or more extracted program contents.

4. The method according to claim 2, wherein:
the content key information of the program in the IPTV system extracted by the first terminal further comprises one or any combination of following information:
webpage address information of a default IPTV portal;
comment information of the program; and
screenshot information of the program.

5. The method according to claim 1, 2, 3 or 4, wherein:
the first terminal sends the generated recommended content information by adopting a form of encrypted ciphertext.

6. A method for sharing programs in an internet protocol television system, comprising:
a second terminal receiving a short message or a multimedia message sent by a first terminal, and obtaining content key information of program content in an IPTV system according to recommended content information in the short message or the multimedia message; and
after the second terminal logs on the IPTV system, redirecting to the program content in the IPTV system according to the obtained content key information.

7. The method according to claim 6, wherein:
the second terminal redirects to the program content in the IPTV system according to a column ID and program ID of the program content in the IPTV system included in the obtained content key information.

8. The method according to claim 7, wherein:
the second terminal locates a corresponding playing position of the program content for playing according to one or more playing progress positions included in the obtained content key information.

9. The method according to claim 6, 7 or 8, wherein:
when the recommended content information in the short message or the multimedia message received by the second terminal is in a form of encrypted ciphertext, the second terminal obtains the content key information after decrypting the recommended content information.

10. A terminal for sharing programs in an internet protocol television system, comprising:
a key information extracting module, configured to: extract content key information corresponding to program content in an IPTV system;
a recommended content information generating module, configured to: generate recommended content information based on the content key information; and
a recommended content information sending module, configured to: send the recommended content information to other intelligent terminal users through a way of a short message or a multimedia message.

11. The terminal according to claim 10, wherein:
the key information extracting module is configured to: extract the following content key information of the program content: a column ID and program ID of the program content in the IPTV system.

12. The terminal according to claim 10, wherein:
the key information extracting module is configured to: extract content key information of one or more program contents in the IPTV system when the terminal browses or watches the program content in the IPTV system; and
the recommended content information generating module is configured to: generate the recommended content information based on content key information of one or more program contents extracted by the key information extracting module.

13. The terminal according to claim 11, wherein:
the key information extracting module is further configured to: extract one or any combination of following content key information of the program in the IPTV system:
webpage address information of a default IPTV portal;
comment information of the program; and
screenshot information of the program.

14. The terminal according to claim 10, 11, 12 or 13, wherein:
the first terminal sends the generated recommended content information by adopting a form of encrypted ciphertext.

15. A terminal for sharing programs in an internet protocol television system, comprising:
an information receiving and analyzing module, configured to: receive a short message or a multimedia message sent by other terminals, and obtain content key information of program content in an IPTV system according to recommended content information in the short message or the multimedia message; and
a program redirecting module, configured to: after the terminal logs on the IPTV system, redirect to the program content in the IPTV system according to the content key information obtained by the information receiving and analyzing module.

16. The terminal according to claim 15, wherein:
the program redirecting module is configured to: redirect to the program content in the IPTV system according to a column ID and program ID of the program content in the IPTV system included in the content key information.

17. The terminal according to claim 16, wherein:
the program redirecting module is configured to: locate a corresponding playing position of the program content for playing according to one or more playing progress positions included in the obtained content key information.

18. The terminal according to claim 15, 16 or 17, wherein:
the information receiving and analyzing module is configured to: if the recommended content information in the received short message or multimedia message is in a form of encrypted ciphertext, then obtain the content key information after decrypting the recommended content information.
